Europäisches Patentamt

European Patent Office

Office européen des brevets

(19)

(11) **EP 1 107 517 A2**

# (12) EUROPEAN PATENT APPLICATION

(43) Date of publication:
**13.06.2001 Bulletin 2001/24**

(51) Int Cl.⁷: **H04L 12/56, H04Q 11/04**

(21) Application number: **00126961.2**

(22) Date of filing: **08.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **NEC CORPORATION**<br>**Tokyo (JP)** |
| (30) Priority: **09.12.1999 JP 35077899** | (72) Inventor: **Matsumura, Kenji**<br>**Minato-ku, Tokyo (JP)** |
| | (74) Representative: **Betten & Resch**<br>**Postfach 10 02 51**<br>**80076 München (DE)** |

## (54) Multi-rate ATM switching system and method

(57)    An ATM switching system (20) allowing simplified cell flow control is disclosed. A high-speed flow of incoming ATM cells is distributed in cell units by a cell demultiplexer (25) to predetermined input ports of an ATM switch in an order in which the incoming ATM cells arrived. After cell switching of the ATM switch (26), outgoing ATM cells received in parallel from predetermined output ports of the ATM switch are multiplexed by a cell multiplexer (27) to produce a high-speed flow of outgoing ATM cells.

FIG.1

EP 1 107 517 A2

**Description**

The present invention related to an ATM (Asynchronous Transfer Mode) switching system, and in particular to a multi-rate ATM switching technique allowing multi-rate incoming/outgoing lines to be accommodated.

In data communication using the ATM technique, an ATM cell switching system accommodating multi-rate incoming/outgoing lines has been disolosed in, for example, Japanese Patent Application Unexamined Publication No. 10-276211.

More specifically, the conventional ATM switching system is provided with an ATM demultiplexer, an internal routing section (e.g. ATM switch core fabric) , and an ATM multiplexer. A high-speed incoming line is connected to the input terminal of the ATM demultiplexer having N low-speed output terminals. which are connected to respective ones of N input ports of the internal routing section. N output ports of the internal routing section are connected to respective ones of N low-speed input terminals of the ATM multiplexer whose output terminal is connected to a high-speed outgoing line. The ATM demultiplexer and multiplexer allow a high-speed transmission line to be accommodated without the need to increase the processing speed of the internal routing section.

In the conventional ATM switching system as described above, the ATM demultiplexer demultiplexes an incoming high-speed cell flow into N low-speed cell flows for respective ones of connections. This causes the control of cell flows to be complicated as described hereafter.

Assuming the ATM demultiplexer connected to a 600Mbps incoming line and four 150Mbps incoming lines which are connected respectively to four input ports of the internal routing section, each path of 150Mbps or less can be demultiplexed and outputted to a corresponding input port without congestions.

However, when a 100Mbps path and a 400Mbps path are input to the ATM demultiplexer. the 100Mbps path are distributed to a first input port and the 400Mbps path is distributed among the four input ports. In the case of simple distribution control, a cell flow of 100Mbps + 100Mbps (=400Mbps/4) =200Mbps is outputted to the first input port, resulting in congestion at the first input port. In order to avoid such congestions, a complicated flow control is needed. It is the same with the ATM multiplexer.

Therefore, an object of the present invention is to provide an ATM switching system and method allowing simplified cell flow control.

According to an aspect of the present invention, a multi-rate switching system includes: an ATM (asynchronous transfer mode) switch having a plurality of input and output ports each having different port numbers assigned thereto, wherein ATM cells arriving at respective ones of the input ports are transferred to appropriate ones of the output ports in units of a predetermined time period based on header information of each of the ATM cells; a cell demultiplexer for distributing a flow of incoming ATM cells in units of an ATM cell to a plurality of predetermined input ports of the ATM switch in an order in which the incoming ATM cells arrived; and a cell multiplexer for multiplexing outgoing ATM cells received in parallel from a plurality of predetermined output ports of the ATM switch to produce a flow of outgoing ATM cells.

The cell demultiplexer may include: a first selector for sequentially selecting parallel lines in a predetermined order of the parallel lines to output an incoming ATM cell to a selected one of the parallel lines, wherein the parallel lines correspond to the predetermined input ports of the ATM switch; and a first FIFO buffer for temporarily storing incoming ATM cells received through the parallel lines from the first selector in a first-in-first-out (FIFO) scheme to output them in parallel to the predetermined input ports of the ATM switch in synchronization with each other.

The cell multiplexer may include a second selector for sequentially selecting one of the outgoing ATM cells in a predetermined order of the predetermined output ports to produce the flow of the outgoing ATM cells.

The ATM switch may include: a second FIFO buffer for temporarily storing ATM cells to be transferred to respective ones of the input ports in a FIFO scheme; a switch controller for controlling cell switching of a plurality of ATM cells to be forwarded to the predetermined output ports such that the plurality of ATM cells to be forwarded to the predetermined output ports are sequentially assigned to sequential ones of the predetermined output ports in a circular manner; and an ATM switch core for switching the ATM cells stored in the second FIFO buffer under cell switching control of the switch controller.

The cell demultiplexer may further include a first sequence controller for providing each of the incoming ATM cells with a sequence identification number indicating an arrival order thereof, wherein the incoming ATM cells with sequence identification numbers are transferred to the first selector.

The cell multiplexer may further include: a third FIFO buffer for temporarily storing the outgoing ATM cells in a FIFO scheme; and a second sequence controller for determining whether the outgoing ATM cells stored in the third FIFO buffer are in order by checking the sequence identification numbers of the outgoing ATM cells, wherein, if the outgoing ATM cells are not in order, then the second sequence controller controls the third FIFO buffer such that the outgoing ATM cells are read out from the third FIFO buffer in the order of the sequence identification numbers.

According to the present invention, a flow of incoming ATM cells is distributed in units of an ATM cell to a plurality of predetermined input ports of the ATM switch in an order in which the incoming ATM cells arrived. After cell switching of the ATM switch, outgoing ATM cells received in parallel from a plurality of predetermined output ports of the ATM switch are multiplexed to produce a flow of outgoing ATM cells.

Since the incoming ATM cells are distributed in the cell arrival order independently of connections, cell demultiplexing control at the input stage can be simplified, resulting in reduce amount of hardware. Similarly, since cell synchronization, has been made in the ATM switch, cell multiplexing control at the output stage can be also simplified. resulting in reduce amount of hardware.

FIG. 1 is a block diagram showing an outline of a configuration of a multi-rate ATM switching system according to an embodiment of the present invention;

FIG. 2 is a block diagram showing a circuit configuration of a cell demultiplexer according to the present embodiment;

FIG. 3 is a block diagram showing a circuit configuration of an ATM switch section according to the present embodiment;

FIG. 4 is a diagram showing a cell sequence table for determining a sequence of ATM cells to be forwarded to the high-speed outgoing line under grouping control according to the present embodiment;

FIG. 5 is a block diagram showing an example of the ATM switch section according to the present embodiment;

FIG. 6 is a block diagram showing a circuit configuration of a cell multiplexer according to the present embodiment; and

PIG. 7 is a block diagram showing an example of tho cell multiplexer according to the present embodiment.

SYSTEM CONFIGURATION

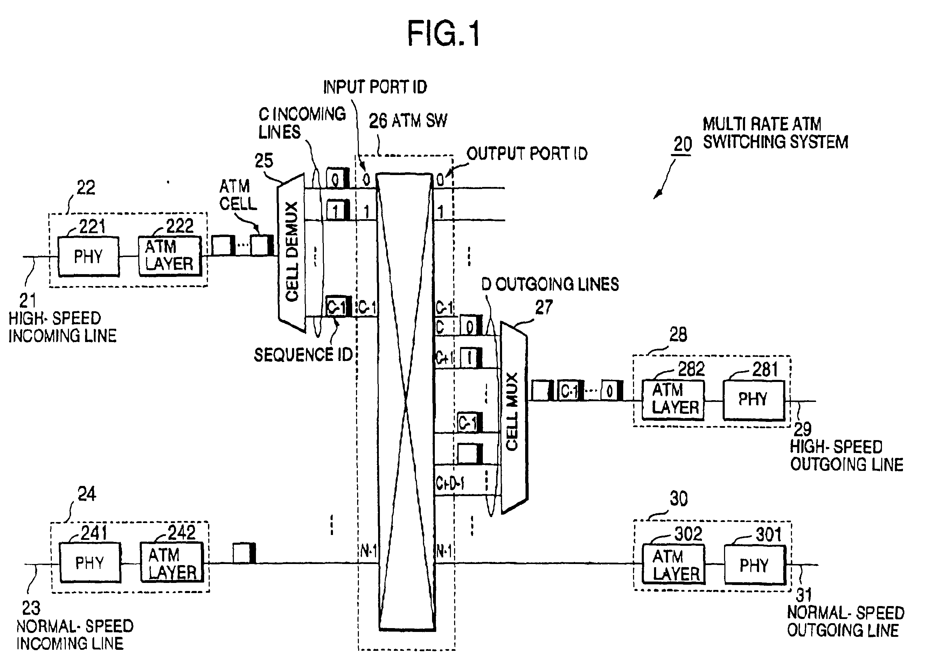

Referring to FIG. 1, it is assumed for simplicity that a multi-rate ATM switching system 20 according to an embodiment of the present invention accommodates a high-speed incoming line 21, a normal-speed incoming line 23, a high-speed outgoing line 29, and a normal-speed outgoing line 31.

The high-speed incoming line 21 is connected to an incoming line port section 22, which is connected to an input terminal of a cell demultiplexer 25. The incoming line port section 22 includes a physical-layer terminating section 221 and an ATM-layer terminating section 222. The C output terminals of the cell demultiplexer 25 are connected to respective ones of C input ports of an N x N ATM switch section 26. Here, the C input ports have input port IDs 0 through C-1 assigned thereto.

The normal-speed incoming line 23 is connected to an input port (here, input port ID = N-1) of the ATM switch section 26 through an incoming line port section 24. The incoming line port section 24 includes a physical-layer terminating section 241 and an ATM-layer terminating section 242.

D output ports (here, output port IDs C-1 through C+D-1) of the ATM switch section 26 arc connected to respective ones of D input terminals of a cell multiplexer 27. The output terminal of the cell multiplexer 27 is connected to the high-speed outgoing line 29 through an outgoing line port section 28 includes a physical-layer terminating section 282 and an ATM-layer terminating section 281. An output port (here, output port ID = N-1) of the ATM switch section 26 is connected to the normal-speed outgoing line 31 through an incoming line port section 30 including a physical-layer terminating section 302 and an ATM-layer terminating section 301.

In the present embodiment, a high-speed incoming/outgoing line is a transmission line whose transmission rate is higher than the input/output port rate of the ATM switch section 26. a normal-speed incoming/outgoing line is a transmission line whose transmission rate is not higher than the input/output port rate of the ATM switch section 26.

The cell demultiplexer 25 demultiplexes an input high-speed ATM cell flow into C ATM cell flows by sequentially distributing ATM cells received from the high-speed incoming line 21 to the C incoming lines in the order in which the ATM cells arrived. The respective ATM cell flows enter the C input ports 0 through C-1 of the ATM switch section 26. Here, the number of ATM cell flows, C, is a minimum value satisfying the following equation:

$$An(bps) \leqq B(bps) \times C \text{ for } C < N,$$

where An is a transmission rate of the high-speed line 21 and B is a rate of each input/output port of the ATM switch section 26.

The cell multiplexer 27 multiplexes the D ATM cell flows output from respective ones of the output ports C-1 through c+D-1 into a high-speed ATM cell flow by sequentially selecting the D ATM cell flows in units of a cell as will be described later. The multiplexed high-speed ATM cell flow is transmitted to the high-speed outgoing line 29 through the outgoing line port section 28. Here, the number of ATM cell flows, D, is a minimum value satisfying the following equation:

$$Am(bps) \leqq B(bps) \times D \text{ for } D < N,$$

where Am is a transmission rate of the high-speed line 29 and B is a rate of each input/output port of the ATM switch section 26.

CELL DEMULTIPLEXER

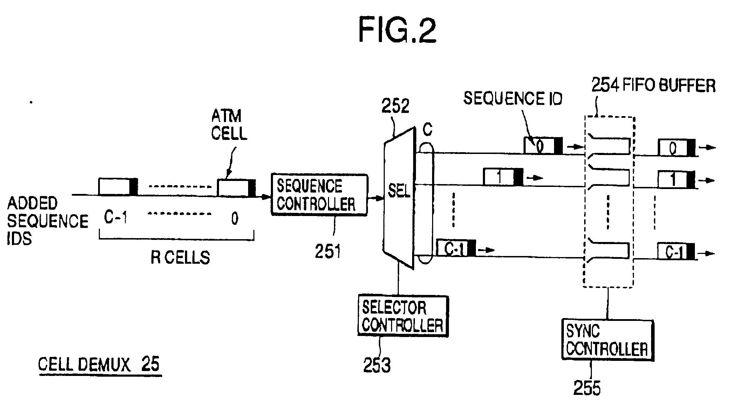

Referring to Fig. 2, the cell demultiplexer 25 includes a sequence controller 251, an input terminal of a selector 252, a selector controller 253, a FIFO (first-in-first-out) buffer 254, and a sync controller 255.

The sequence controller 251 stamps each ATM cell with a sequence identification number (ID) go as to maintain the arriving order of ATM cells. In other words, the sequence ID indicates the arrival order of each ATM cell. The sequence ID is an integer ranging from O to R, where R is determined depending on the system configuration of the multi-rate ATM switching system It is preferable that R is greater than C or D.

The sequence ID is added to each ATM cell for each identifier such as VPI/VCI included in the ATM cell. For example, in the case where two ATM cells of Identifier X and one ATM cell if Identifier Y have been received, the two ATM cells of Identifier X are sequentially stamped with sequence IDs "0" and "1". respectively, and the ATM cell of Identifier Y is stamped with a new sequence ID "0" independently of the above sequence IDs "0" and "1". When the upper limit "R" has been used as a sequence ID, the next sequence ID returns to "0" and sequentially increments in the same way.

The selector 252 has a single input terminal and C output "terminals connected to the C normal-speed incoming lines, each output terminal having a sequential number assigned thereto.
The selector 252 receives the ATM cells from the sequence controller 251 and sequentially distributes them in units of a cell to the C normal-speed incoming lines in the order of the output terminal number of the selector 252 under control of the selector controller 253.

The FIFO buffer 254 includes C buffers for temporarily storing ATM cells received from respective ones of the output terminals of the selector 252. The respective ATM cells are stored in the buffers of the FIFO buffer 254 according to the transmission rate of the high-speed line 21. The respective ATM cells are simultaneously read out from the buffers of the FIFO buffer 254 to the ATM switch section 26 under sync control of the sync controller 255.

ATM SWITCH SECTION

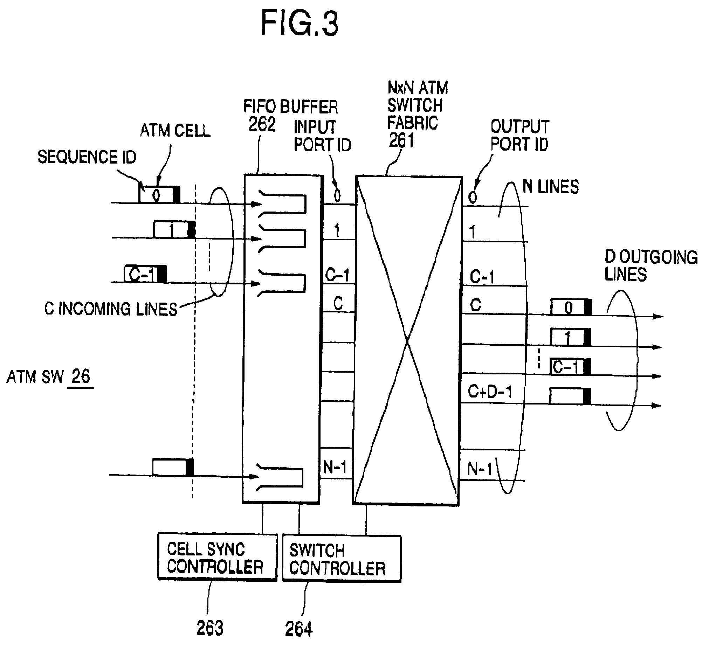

Referring to Fig. 3, the ATM switch section 26 includes an N x N ATM switch core fabric 261, a FIFO buffer 262, a cell sync controller 263, and a switch controller 264. The N x N ATM switch core fabric 261 has N input ports and N output ports. The FIFO buffer 262 includes N buffers each connected to the N input ports of the ATM switch core fabric 261. The cell sync controller 263 performs synchronization control of ATM cells stored in the FIFO buffer 262, allowing variations in cell delay to be corrected.

The N buffers temporarily store ATM cells before entering the ATM switch core fabric 261 so as to synchronize transfer of the ATM cells to respective ones of the input ports 0 through N-1 of the ATM switch core fabric 261.

In addition, the FIFO buffer 262 outputs the identifier of a first ATM cell stored in each of the N buffers and the input port ID of a corresponding input port of the ATM switch core fabric 261 to the switch controller 264. The switch controller 264 sends an output port ID back to the FIFO buffer 262 in response to the identifier and the input port ID for each first ATM cell received from the FIFO buffer 262. The FIFO buffer 262 outputs the first ATM cells accompanied by the output port IDs from respective ones of the N buffers to the corresponding input ports of the ATM switch core fabric 261.

The ATM switch core fabric 261 transfers the N input cells from respective ones of the input ports to output ports determined depending on the output port IDs accompanying respective ones of the N input cells. Accordingly, N cells can be switched in a cell period.

The switch controller 264 performs the cell scheduling for N cells during a cell period. More specifically, the switch controller 264 searches a routing table (not shown) based on the identifier of each cell and the input port ID thereof and sends the search result, that is, available output port IDs, to the FIFO buffer 262 to assign them to respective ones of the N cells.

In the case where a plurality of cells request the same output port in a cell period, however, the switch controller 264 provides the output port ID to a cell stored in a buffer of the FIFO buffer 262 corresponding to the lowest input port ID among the cells requesting the same output port. No output port ID is provided to the remaining colls requesting the same output port. The cell scheduling for the remaining cells will be performed in the next cell period. In the next cell period, cell scheduling priority is given to a cell stored in a buffer of the FIFO buffer 262 corresponding to the second lowest input port ID among the cells requesting the same output port.

In this manner, the cell switching control is performed. However, as for the C buffers connected to respective ones of the C incoming lines of the cell demultiplexer 25 corresponding to the high-speed incoming line 21, a grouping control is performed. The grouping control is such that the input ports of the ATM switch core fabric 261 corresponding to respective ones of the C incoming lines of the cell demultiplexer 25 (here, input port IDs 0 through C-1) are handled as a group to perform cell switching. The details will be described hereafter.

GROUPING CONTROL

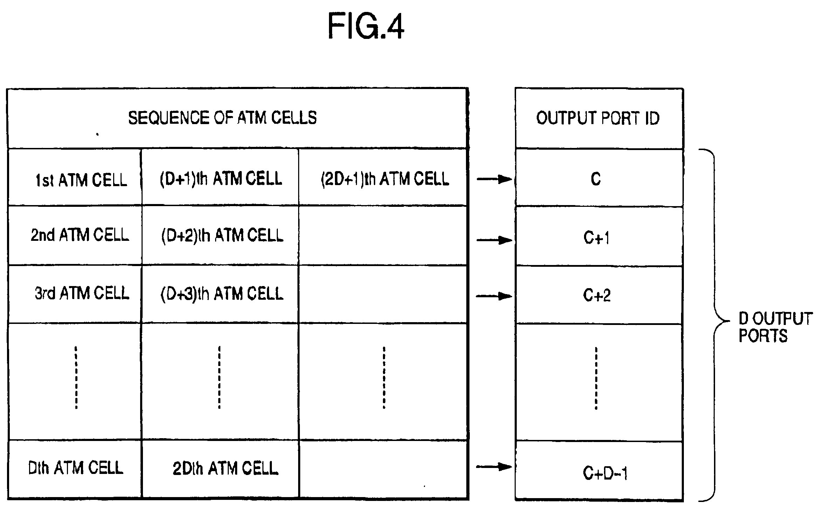

In the case as shown in Fig. 3, the input ports of IDs 0 through C-1 are handled as a single group. Similarly, the output ports of IDs C through C+D-1 are also handled as a single group. The switch controller 264 is previously set to the grouping control as shown in Fig. 4.

Referring to Fig. 4. when a cell to be forwarded to the high-speed outgoing line 29 is first stored in the FIFO buffer 262, the switch controller 264 determines based on a cell sequence table that the cell is a first cell to be forwarded to the output port of ID = C and notifies the FIFO buffer 262 of the output port ID - C for the first cell. If another cells to be forwarded to the high-speed outgoing line 29 during the same cell period is stored in the FIFO buffer 262, the switch controller 264 determines based on the cell sequence table that the cell is a second cell to be forwarded to the output port of ID = C+1 and notifies the FIFO buffer 262 of the output port ID = C+1 for the second cell. Similarly, If still another cells to be forwarded to the high-speed outgoing line 29 during the same cell period is stored in the FIFO buffer 262, the switch controller 264 notifies the FIFO buffer 262 of the output port ID = C+2 for the third cell. In this way, a maximum of C+D-1 output port IDs for D cells to be forwarded to the high-speed outgoing line 29 is sent to the FIFO buffer 262 during the same cell period. In other words, a maximum of D input/output ports that are grouped is allowed to be scheduled to receive D cells during a cell period.

In the next cell period, when a cell to be forwarded to the high-speed outgoing line 29 is stored in the FIFO buffer 262, the switch controller 264 determines based on a cell sequence table that the cell is to be forwarded to an output port following the output port that was determined in the previous cell period. For example, in the case where tho last cell was determined to be forwarded to the output port or ID = C+3 in the previous cell period, a first cell in the current cell period will be determined to be forwarded to the next output port of ID = C+4. If the last cell was determined to be forwarded to the output port of ID = C+D-1 in the previous cell period, a first cell in the current cell period will be determined to be forwarded to the first output port of ID = C.

EXAMPLE OF GROUPING CONTROL

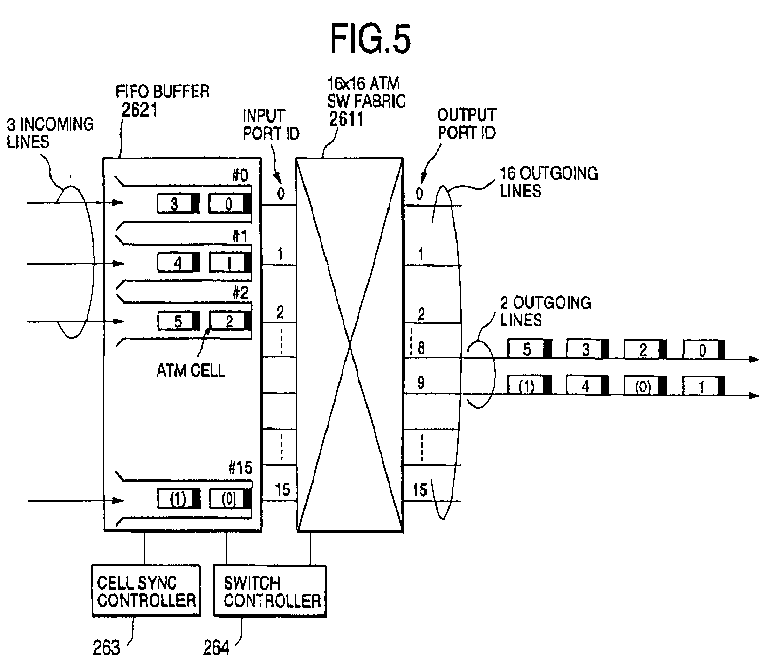

As shown in Fig. 5. taking as an example a 16 x 16 ATM switch core fabric 2611. the grouping control of the ATM switch section 26 will be described more specifically. In this example, a FIFO buffer 2621 include 16 buffers #0-#15 corresponding to 16 input ports of IDS = 0-15 of the 16 x 16 ATM switch core fabric 2611. Further, the high-speed incoming line has a transmission rate of 3B, that is, C - 3, and the high-speed outgoing line also has a transmission rate of 2B. that is. D = 2. The three incoming lines are connected to respective ones of input ports of IDs = 0, 1, and 2 through the FIFO buffer 2621. The two outgoing lines are connected to respective ones of output ports of IDs = 8 and 9, which are grouped. In addition, the normal-speed incoming line 23 is connected to the input port of ID = 15.

It is further assumed that each of the buffers #0, #1, #2, and #15 of the FIFO 2621 stores two cells to be forwarded to the output ports 8 and 9, where the buffer #0 stores two cells of sequence IDs - 0 and 3, the buffer #1 stores two cells of sequence IDS = 1 and 4, the buffer #2 stores two cells of sequence IDs = 2 and 5, and the buffer #15 stores two cells having no sequence ID stamped. In Fig. 5, the cells stored in the buffer #15 are labelea with numbers 0 and 1 put in blankets so as to indicate the arrival order thereof.

As shown in Fig. 5, in the first cell period, the cell of sequence ID=0 stored in the buffer #0 is determined to be forwarded to the output port of ID=8, and thereafter the cell of sequence ID-1 stored in the buffer #1 is determined to be forwarded to the output port of ID=9 that is grouped with the output port of ID=8. Then, these cells of IDs = 0 and 1 are forwarded to the output ports of IDs= 8 and 9, respectively.

In the next cell period, the respective buffers #0, #1, #2, and #15 store the cells of IDS = 3, 4, 2, and (0) as the first cells thereof. In this status, the cell of sequence ID=2 stored in the buffer #2 is determined to be forwarded to the output port of ID=8, and thereafter the cell (labeled with "(0)" as arrival order) stored in the buffer #15 is determined to be forwarded to the output port of ID=9 that is grouped with the output port of ID=8. Then, the cell of ID=2 and the cell labeled with "(0)" are forwarded to the output ports of IDs = 8 and 9, respectively.

In the following cell periods, the same control as described above is repeatedly performed. Therefore, the cells of IDs= 3 and 4 are forwarded to the output ports of IDs = 8 and 9, respectively and, in the further next cell period, the cell of ID=5 and the cell labeled with "(1)" are forwarded to the output ports of ID=8 and 9, respectively.

CELL MULTIPLEXER

Referring to Fig- 6, the cell multiplexer 27 includes a FIFO buffer 271. a sequence controller 272, and a selector 273. the FIFO buffer 271 has D buffers #0-#(D-1) corresponding to D output ports of IDS = C through C+D-1. The sequence controller 272 performs sequence control of first cells stored in the respective ones of the buffers #0-#(D-1). The selector 273 sequentially selects the first cells stored in the respective ones of the buffers #0-#(D-1) to multiplex them on the high-speed outgoing line 29.

Normally, the respective cells from the ATM switch section 26 are synchronized and inputted to the buffers #0-#(D-1). If out of cell synchronization, timing adjustment is made so as to synchronize them.

When the cells have been stored in the FIFO buffer 271, the FIFO buffer 271 outputs the sequence ID and identifier of each cell to the sequence controller 272. Based on the sequence IDs and identifiers of respective ones of the cells stored in the buffers #0-#(D-1), the sequence controller 272 controls the FIFO buffer 271 such that D cells are read out from respective ones of the buffers #0-#(D-1) during a cell period of the ATM switch section 26 and they are outputted to the selector 273 so that the selector 273 sequentially multiplexes them in the order of buffer number.

When the D cells are read out from respective ones of the buffers #0-#(D-1), the sequence controller 272 checks the sequence ID for each identifier. If the cells are not in order, the sequence controller 272 performs order adjustment of the cells as will be described hereafter.

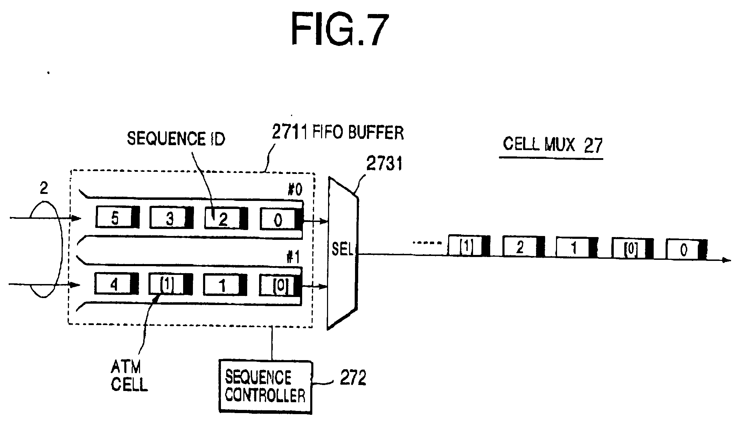

Referring to Fig. 7, taking the case of D=2 as an example, the cell order adjustment will be described more specifically. In this example, a FIFO buffer 2711 has two buffers #0 and #1 corresponding to two output ports of IDs = 8 and 9 as shown in Fig. 5. A selector 2731 sequentially selects the first cells stored in the respective ones of the buffers #0 and #1 to multiplex them into a serial cell flow.

It is assumed that each of the buffers #0 and #1 of the FIFO 2711 stores four cells, where the buffer #0 stores cells of sequence IDs - 0, 2, 3 and 5 and the buffer #1 stores cells of sequence IDs = (0), 1, (1), and 4, As in the case of Fig. 5, numbers 0 and 1 put in blankets indicate the cell arrival order. It is further assumed that the cells of IDs=0-5 have a certain identifier and the cells of sequence IDs =(0) and (1) have another identifier. It is still further assumed that the order of the cells stored in the buffer #1 is different from that of the cells outputted from the output port of ID=9 as shown in Fig. 5 such that the first cell of sequence ID=1 (see Fig. 5) is changed to the second cell (see Fig. 7) and the third cell of sequence ID=4 (see Fig. 5) is changed to the fourth cell (see Fig. 7). In this status, the sequence controller 272 performs the order correction as described hereafter.

In Fig. 7, in the first cell period, the first cells of IDs = 0 and (0) stored respective ones of the buffers #0 and #1 are sequentially read out to the selector 2731 in the order of the buffer number #0 and #1. Then, these cells of IDs = 0 and (0) are multiplexed and sent toward the high-speed outgoing line 29.

In the next cell period, the sequence controller 272 checks the sequence IDs of the cells to be read out and determines that the first cells of IDs = 2 and 1 stored respective ones of the buffers #0 and #1 are not in the order of the buffer number #0 and #1. Therefore, the sequence controller 272 first reads the cell of sequence ID=1 from the buffer #1 and thereafter reads the cell of sequence ID=2 from the buffer #0.

In this manner. the sequence controller 272 performs the read control while checking the sequence ID of each cell to be read out from the FIFO buffer 2711. If the cells are not read in order, then the sequence controller 272 corrects the order and thereby the cells to be multiplexed are read out from the FIFO buffer 2711 in order.

OPERATION

A whole operation of the present embodiment will be described hereafter.

It is assumed as shown in Fig. 1 that C ATM cells having the same identifier are received from the high-speed incoming line 21 and one ATM cell having anther identifier is received from the normal-speed incoming line 23. where C + 1 ≦ N and the C+1 ATM cells are all to be forwarded to the high-speed outgoing line 29.

The C ATM cells are sequentially inputted to the cell demultiplexer 25 through the input port section 22 and the one ATM cell is inputted to the input port of ID = N-1 of the ATM switch section 26 through the input port section 24.

As shown in Fig. 2, the C ATM cells inputted to the cell demultiplexer 25 are sequentially provided with sequence IDs (0, 1, 2, ... , C-1) for each identifier of the ATM cells, The selector 252 receives the C ATM cells and sequentially distributes them in units of a cell to the FIFO buffer 254 in the order in which they arrived under control of the selector controller 253.

The respective C ATM cells are stored in the buffers of the FIFO buffer 254 according to the transmission rate of the high-speed line 21- The respective C ATM cells are simultaneously read out from the buffers of the FIFO buffer 254 to the ATM switch section 26 under sync control of the sync controller 255.

The one ATM cell from the normal-speed incoming line 23 is also transferred to the ATM switch section 26 in synchronization with the C ATM cells.

As shown in Fig. 3, in the ATM switch section 26, the C+1 ATM cells are temporarily stored in the FIFO buffer 262 and are synchronized under control of the cell sync controller 263. The switch controller 264 receives the identifier of a first ATM cell stored in each of the N buffers and the input port ID of a corresponding input port of the ATM switch core fabric 261 from the FIFO buffer 262. Therefore, the switch controller 264 knows by searching the routing table or the like that all the C+1 ATM cells are to be forwarded to the high-speed outgoing line 29. Since the output ports for the high-speed outgoing line 29 are set for the grouping control, the switch controller 264 sends the output port IDs C through C+C back to the FIFO buffer 262 so as to assign these output port IDs to respective ones of the C+1 ATM cells stored in the FIFO buffer 262. Accordingly, the ATM switch core fabric 261 transfers the C+1 ATM cells from respective ones of the N buffers to the destination output ports of IDs C through C+C in a cell period. The C+1 ATM cells are then transferred from the output ports to the cell multiplexer 27.

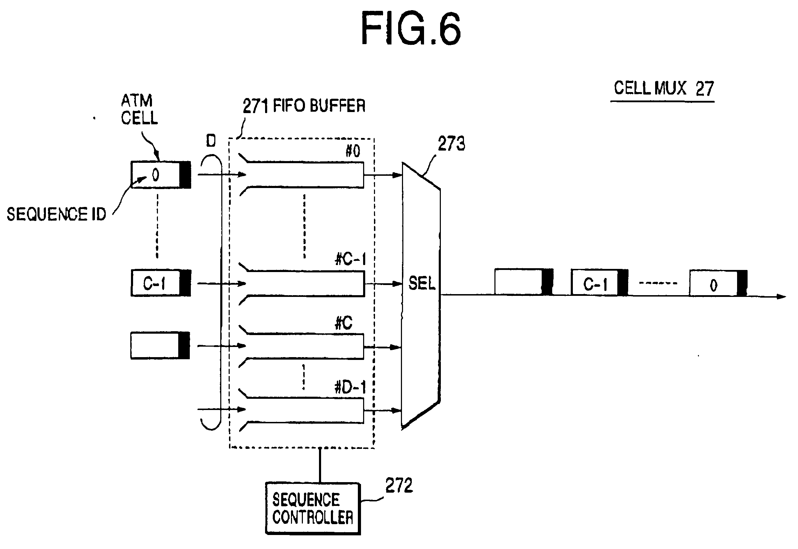

In the cell multiplexer 27 as shown in Fig. 6, the C+1 ATM cells are stored in the FIFO buffer 271 and the sequence ID and identifier of each of the C+1 ATM cells arc output to the sequence controller 272. Based on the sequence IDs and identifiers of respective ones of the C+1 ATM cells, the sequence controller 272 controls the FIFO buffer 271 such that D cells are read out from respective ones of the buffers #0-#(D-1) while checking the sequence IDs thereof for each identifier. If the C+1 ATM cells are not in order, the sequence controller 272 performs order adjustment of the cells as described before. In this manner, the selector 273 is allowed to sequentially select the C+1 ATM cells in order to multiplex them into a high-speed ATM cell flow to be sent to the high-speed outgoing line 29 through the outgoing line port section 28.

OTHER EMBODIMENTS

In Fig. 3, the FIFO buffer 262 and the cell sync controller 263 are used to compensate for deviations in cell synchronization occurring between the cell demultiplexer 25 and the ATM switch core fabric 261.

However, in the case where such a cell sync deviation is negligible in design, it is possible to reduce the capacity of the FIFO buffer 262 and further the cell sync controller 263 may be removed from the ATM switch section 26, resulting in reduce amount of hardware.

In the above embodiment, the cell demultiplexer 25 is provided with the sequence controller 251 as shown in Fig. 2 and the cell multiplexer 27 is provided with the sequence controller 272 as shown in Fig. 6. The cell demultiplexer 25 and the cell multiplexer 27 are designed to hold the arrival order of ATM cells from the high-speed incoming line 21 by adding sequence IDs to the incoming ATM cells and keeping the arrival order based on the sequence IDs.

However, it is possible to remove the sequence controller 251 and the sequence controller 272 from the cell demultiplexer 25 and the cell multiplexer 27 when the followings are ensured:

- The selector 252 of the cell demultiplexer 25 distributes incoming ATM cells in the order in which they arrived to the input ports in the ascending order of input port ID;
- Cell synchronization is ensured between functional blocks; and
- The selector 273 of the cell multiplexer 27 selects ATM cells in the ascending order of output port ID to multiplex them.

In the case where these conditions are satisfied, the arrival order of incoming ATM cells can be held without the need of sequence ID and therefore the sequence controller 251 and the sequence controller 272 may be deleted, resulting in reduce amount of hardware.

**Claims**

1. A multi-rate switching system comprising:

   an ATM (asynchronous transfer mode) switch (26) having a plurality of input and output ports each having different port numbers assigned thereto, wherein ATM cells arriving at respective ones of the input ports are transferred to appropriate ones of the output ports in units of a predetermined time period based on header information of each of the ATM cells;

   characterized by:

   a cell demultiplexer (25) for distributing a flow of incoming ATM cells in units of an ATM cell to a plurality of predetermined input ports of the ATM switch in an order in which the incoming ATM cells arrived; and
   a cell multiplexer (27) for multiplexing outgoing ATM cells received in parallel from a plurality of predetermined output ports of the ATM switch to produce a flow of outgoing ATM cells.

2. The multi-rate switching system according to claim 1, wherein the cell demultiplexer comprises:

   a first selector (252) for sequentially selecting parallel lines in a predetermined order of the parallel lines to output an incoming ATM cell to a selected one of the parallel lines, wherein the parallel lines correspond to the predetermined input ports of the ATM switch; and
   a first FIFO buffer (254) for temporarily storing incoming ATM cells received through the parallel lines from the first selector in a first-in-first-out (FIFO) scheme to output them in parallel to the predetermined input ports of the ATM switch in synchronization with each other.

3. The multi-rate switching system according to claim 2, wherein the cell multiplexer comprises:

   a second selector (273) for sequentially selecting one of the outgoing ATM cells in a predetermined order of the predetermined output ports to produce the flow of the outgoing ATM cells.

4. The multi-rate switching system according to any of claims 1-3, wherein the ATM switch comprises:

   a second FIFO buffer (262) for temporarily storing ATM cells to be transferred to respective ones of the input ports in a FIFO scheme;
   a switch controller (264) for controlling cell switching of a plurality of ATM cells to be forwarded to the predetermined output ports such that the plurality of ATM cells to be forwarded to the predetermined output ports are sequentially assigned to sequential ones of the predetermined output ports in a circular manner; and an ATM switch core (261) for switching the ATM cells stored in the second FIFO buffer under cell switching control of the switch controller.

5. The multi-rate switching system according to claim 3, wherein the cell demultiplexer further comprises: a first sequence controller (251) for providing each of the incoming ATM cells with a cequence identification number indicating an arrival order thereof, wherein the incoming ATM cells with sequence identifioation numbers are transferred to the first selector.

6. The multi-rate switching system according to claim 5, wherein the cell multiplexer further comprises:

a third FIFO buffer (271) for temporarily storing the outgoing ATM cells in a FIFO scheme; and a second sequence controller (272) for determining whether the outgoing ATM cells stored in the third FIFO buffer are in order by checking the sequence identification numbers of the outgoing ATM cells, wherein, if the outgoing ATM cells are not in order, then the second sequence controller controls the third FIFO buffer such that the outgoing ATM cells are read out from the third FIFO buffer in the order of the sequence identification numbers.

7. The multi-rate switching system according to claim 6, wherein the ATM switch comprises:

a second FIFO buffer for temporarily storing ATM cells to be transferred to respective ones of the input ports in a FIFO scheme; a switch controller for controlling cell switching of a plurality of ATM cells to be forwarded to the predetermined output ports such that the plurality of ATM cells to be forwarded to the predetermined output ports are sequentially assigned to sequential ones of the predetermined output ports in a circular manner; and an ATM switch core for switching the ATM cells stored in the second FIFO buffer under cell switching control of the switch controller.

8. A multi-rate switching method using an ATM (asynchronous transfer mode) switch having a plurality of input and output ports each having different port numbers assigned thereto, wherein ATM cells arriving at respective ones of the input ports are transferred to appropriate ones of the output ports in units of a predetermined time period based on header information of each of the ATM cells, the method characterized by the steps of:

a) distributing a flow of incoming ATM cells in units of an ATM cell to a plurality of predetermined input ports of the ATM switch in an order in which the incoming ATM cells arrived; and b) multiplexing outgoing ATM cells received in parallel from a plurality of predetermined output ports of the ATM switch to produce a flow of outgoing ATM cells.

9. The multi-rate switching method according to claim 8, wherein the step (a) comprises the steps of:

a.1) sequentially selecting parallel lines in a predetermined order of the parallel lines to output an incoming ATM cell to a selected one of the parallel lines, wherein the parallel lines correspond to the predetermined input ports of the ATM switch; and a.2) temporarily storing incoming ATM cells received through the parallel lines in a first FIFO (first-in-first-out) buffer to output them in parallel to the predetermined input ports of the ATM switch in synchronization with each other.

10. The multi-rate switching method according to claim 9, wherein the step (b) comprises the step of: b-1) sequentially selecting one of the outgoing ATM cells in a predetermined order of the predetermined output ports to produce the flow of the outgoing ATM cells.

11. The multi-rate switching method according to any of claims 8-10, further comDrising the steps of:

at the ATM switch, temporarily storing ATM cells to be transferred to respective ones of the input ports in a second FIFO buffer; controlling cell switching of a plurality of ATM cells to be forwarded to the predetermined output ports such that the plurality of ATM cells to be forwarded to the predetermined output ports are sequentially assigned to sequential ones of the predetermined output ports in a circular manner; and switching the ATM cells stored in the second FIFO buffer under control of the cell switching.

12. The multi-rate switching method according to claim 9, wherein the step (a) further comprises the step of: a.0) providing each of the incoming ATM cells with a sequence identification number indicating an arrival order thereof, wherein the incoming ATM cells with sequence identification numbers are used at the step (a-1).

13. The multi-rate switching method according to claim 10, wherein the step (b) further comprises the steps of:

temporarily storing the outgoing ATM cells in a third FIFO buffer:

determining whether the outgoing ATM cells stored in the third FIFO buffer are in order by checking the sequence identification numbers of the outgoing ATM cells;

when the outgoing ATM cells are not in order, controlling the third FIFO buffer such that the outgoing ATM cells are read out from the third FIFO buffer in the order of the sequence identification numbers.

14. The multi-rate switching method according to claim 13, further comprising the steps of:

at the ATM switch.

temporarily storing ATM cells to be transferred to respective ones of the input ports in a second FIFO buffer;

controlling cell switching of a plurality of ATM cells to be forwarded to the predetermined output ports such that the plurality of ATM cells to be forwarded to the predetermined output ports are sequentially assigned to sequential ones of the predetermined output ports in a circular manner; and

switching the ATM cells stored in the second FIFO buffer under control of the cell switching.

# FIG.1

MULTI RATE ATM SWITCHING SYSTEM 20

# FIG.2

CELL DEMUX 25

EP 1 107 517 A2

# FIG.3

EP 1 107 517 A2

# FIG.4

| SEQUENCE OF ATM CELLS | | | | OUTPUT PORT ID |
|---|---|---|---|---|
| 1st ATM CELL | (D+1)th ATM CELL | (2D+1)th ATM CELL | → | C |
| 2nd ATM CELL | (D+2)th ATM CELL | | → | C+1 |
| 3rd ATM CELL | (D+3)th ATM CELL | | → | C+2 |
| ⋮ | ⋮ | ⋮ | | ⋮ |
| Dth ATM CELL | 2Dth ATM CELL | | → | C+D-1 |

} D OUTPUT PORTS

EP 1 107 517 A2

# FIG.5

3 INCOMING LINES

FIFO BUFFER 2621

INPUT PORT ID

16x16 ATM SW FABRIC 2611

OUTPUT PORT ID

16 OUTGOING LINES

#0

#1

#2

ATM CELL

#15

2 OUTGOING LINES

CELL SYNC CONTROLLER

SWITCH CONTROLLER

263

264

EP 1 107 517 A2

# FIG.6

ATM CELL

271 FIFO BUFFER

CELL MUX 27

SEQUENCE ID

273

#0

#C-1

#C

#D-1

SEL

SEQUENCE CONTROLLER 272

EP 1 107 517 A2

# FIG.7

SEQUENCE ID          2711 FIFO BUFFER

CELL MUX 27

2731

#0

| 5 | 3 | 2 | 0 |

SEL

#1

| 4 | [1] | 1 | [0] |

....... | [1] | 2 | 1 | [0] | 0 |

ATM
CELL

SEQUENCE
CONTROLLER          272

EP 1 107 517 A2